# EUROPÄISCHE PATENTSCHRIFT

(11) **EP 2 011 593 B1**
(45) Veröffentlichungstag und Bekanntmachung des Hinweises auf die Patenterteilung: **14.04.2010**
(21) Anmeldenummer: 07405192.1
(22) Anmeldetag: 05.07.2007
(51) Int. Cl.: B23B 5/16

(54) **Rotierbares Werkzeug zum Kalibrieren und Entgraten von wenigstens zwei Rohrenden mit unterschiedlichen Durchmessern**
Rotary tool for calibrating and chamfering at least two pipe ends with differing diameters
Outil rotatif destiné au calibrage et à l'ébavurage d'au moins deux extrémités de tuyaux dotées de diamètres différents

(43) Veröffentlichungstag der Anmeldung: 07.01.2009
(73) Patentinhaber: Geberit International AG, 8645 Jona (CH)
(72) Erfinder: Evertz, Jörg, 8903 Birmensdorf (CH)
(74) Vertreter: Groner, Manfred

(56) Entgegenhaltungen:
- EP-A- 0 649 694
- US-A- 5 853 272
- US-A1- 2004 226 423

## Beschreibung

Die Erfindung betrifft ein rotierbares Werkzeug zum Kalibrieren und Entgraten von wenigstens zwei Rohrenden nach dem Oberbegriff des Anspruchs 1.

Werkzeuge dieser Art sind in der Sanitärtechnik zum Kalibrieren und Entgraten von Rohren, beispielsweise von Verbundrohren seit langem bekannt. Rohrenden müssen insbesondere dann kalibriert und entgratet werden, wenn sie beispielsweise mit einer Muffe miteinander verbunden werden. Exaktes kalibrieren und entgraten ist eine wesentliche Voraussetzung für eine dichte und dauerhafte Verbindung der Rohrenden. Das Rotieren der Werkzeuge oder der Rohre kann von Hand oder mit einem motorischen Antrieb, beispielsweise mit einer Handbohrmaschine erfolgen.

Die gattungsbildende EP-A-0 649 694 offenbart ein Werkzeug, das im Wesentlichen hülsenförmig ausgebildet ist und am Umfang Längsrillen besitzt, an denen das Werkzeug gefasst werden kann. Die US 5,853,272 offenbart ein Werkzeug, das auf einer Aussenseite Rippen aufweist, die ein Drehen von Hand ermöglichen sollen. Ein ebenfalls hülsenförmiges Kalibrierwerkzeug ist in der US-A-2004/0226423 offenbart.

Die EP-A-0 625 397 des Anmelders zeigt ein Werkzeug, das einen stielförmigen Griff besitzt, an dem das Werkzeug gefasst und zum Entgraten und Kalibrieren rotiert werden kann. Ein stufenförmiger Aufbau der Kalibrierbereiche und der Schneiden ermöglicht ein Entgraten von Rohren mit unterschiedlichen Durchmessern.

Ein Kalibrieren und Entgraten von Rohren mit unterschiedlichen Durchmessern ist auch beim Werkzeug nach der DE-U-297 13 050 möglich. Die Kalibrierkörper sind hier als Kalibrierdorne ausgebildet, die Sternförmig an einem Gehäuse angeordnet sind. Sie sind in Umfangsrichtung beabstandet radial vom Gehäuse wegstehend. Jedem Kalibrierdorn ist eine Schneideinrichtung zugeordnet.

Die EP-A-0 922 518 A offenbart ein Anfaswerkzeug, das für den motorischen Antrieb mit einem Antriebsschaft verbunden ist. Damit Rohre mit unterschiedlichen Durchmessern kalibriert und entgratet werden können, ist gemäss der Figur 8 eine Ausführung vorgesehen, bei welcher unterschiedlich grosse Anfaswerkzeuge in eine Antriebsvorrichtung eingesetzt sind. Durch gleichzeitigen Antrieb aller Anfaswerkzeuge mit jeweils einer eigenen Achse soll es möglich sein, in kurzer Taktfolge Rohre mit den unterschiedlichsten Durchmessern entgraten und anfasen zu können.

Der Erfindung liegt die Aufgabe zu Grunde, ein Werkzeug der genannten Art zu schaffen, das für einen Handantrieb vorgesehen ist und mit dem Rohre mit unterschiedlichen Rohrdurchmessern entgratete und kalibriert werden können. Das Werkzeug soll trotzdem kompakt und handlich sowie kostengünstig herstellbar sein.

Die Aufgabe ist bei einem gattungsgemässen Werkzeug gemäss Anspruch 1 gelöst. Das Gehäuse ist als rohrförmiger Griff ausgebildet, mit dem das Werkzeug von Hand zum Kalibrieren und Entgraten rotierbar ist und das im Gehäuse wenigstens zwei Kalibrierkörper und zwei Schneiden zum Kalibrieren und Entgraten von Rohrenden mit unterschiedlichen Durchmessern angeordnet sind.

Beim erfindungsgemässen Werkzeug sind die Kalibrierkörper und die Schneiden somit in einem rohrförmigen Griff angeordnet. Ein solches Werkzeug kann sehr kompakt hergestellt werden und ermöglicht ein einfaches und dennoch sicheres zuverlässiges Kalibrieren und Entgraten. Da das Gehäuse gleichzeitig der Griff ist, ergibt sich zudem eine kostengünstige Herstellung mit vergleichsweise wenigen Einzelteilen.

Nach einer Weiterbildung der Erfindung ist vorgesehen, dass wenigsten zwei Kalibrierkörper und zwei Schneiden koaxial ineinander angeordnet sind. Dies ermöglicht einen besonders kompakten Aufbau.

Nach einer Weiterbildung der Erfindung ist vorgesehen, dass das Gehäuse an gegenüberliegenden Enden jeweils eine Öffnung aufweist, in die in entgegengesetzten Richtungen jeweils ein Rohrende zum Kalibrieren und Entgraten einsetzbar ist. In einer ersten Öffnung können hier beispielsweise zwei Kalibrierkörper und zwei Schneiden und in der anderen Öffnung ein Kalibrierkörper und eine Schneide angeordnet sein. Mit einem solchen Werkzeug können mindestens drei unterschiedliche Rohrdurchmesser bearbeitet werden. Das Werkzeug ist dennoch sehr kompakt und handlich.

Nach einer Weiterbildung der Erfindung ist vorgesehen, dass wenigstens ein Kalibrierkörper und wenigstens eine Schneide als einstückiger Einsatz aus Metall hergestellt sind. Dies ermöglicht eine besonders präzise Anordnung von Kalibrierflächen und Schneiden. Ein solcher Einsatz kann austauschbar im Gehäuse angeordnet sein.

Nach einer Weiterbildung der Erfindung ist vorgesehen, dass die Kalibrierkörper und die Schneiden vom Griff umspritzt sind. Der Griff ist hier vorzugsweise aus einem geeigneten Kunststoff hergestellt. Dies ermöglicht eine besonders einfache und kostengünstige Herstellung. Nach der Erfindung besitzt das Gehäuse Griffbereiche, die sich jeweils in Längsrichtung des Werkzeugs erstrecken. Zwischen diesen Griffbereichen sind Fenster für die Spanabfuhr angeordnet. Die Griffbereiche bilden nach der Erfindung Stege, die sich zwischen zwei ringförmigen Teilen des Gehäuses erstrecken. Ein solches Werkzeug kann besonders ökonomisch und kompakt ausgebildet werden. Diese Stege bzw. Griffbereiche sind vorzugsweise bezüglich der Rotationsachse des Werkzeuges drehsymmetrisch angeordnet. Vorzugsweise sind wenigstens drei solche Stege bzw. Griffbereiche vorgesehen.

Nach einer Weiterbildung der Erfindung ist vorgesehen, dass wenigstens für einen Rohrdurchmesser ein Kalibrierkörper zum Innenkalibrieren und ein Kalibrierkörper zum Aussenkalibrieren vorgesehen sind. Das entsprechende Rohrende wird dann somit gleichzeitig innen als auch aussen kalibriert. Dies ermögliche ein besonders präzises Kalibrieren.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: eine räumliche Ansicht eines erfindungsgemässen Werkzeuges sowie drei Rohrenden mit unterschiedlichen Durchmessern,
- Figur 2: eine räumliche Ansicht des erfindungsgemässen Werkzeuges,
- Figur 3: ein Längsschnitt durch das erfindungsgemässe Werkzeug mit einem eingesetzten Rohrende mit kleinem Durchmesser,
- Figur 4: ein Schnitt gemäss Figur 3 jedoch mit einem Rohrende mit grossem Durchmesser,
- Figur 5: ein Schnitt gemäss Figur 3 jedoch mit einem eingesetzten Rohrende mit mittlerem Durchmesser und
- Figur 6: ein Schnitt durch das erfindungsgemässe Werkzeug.

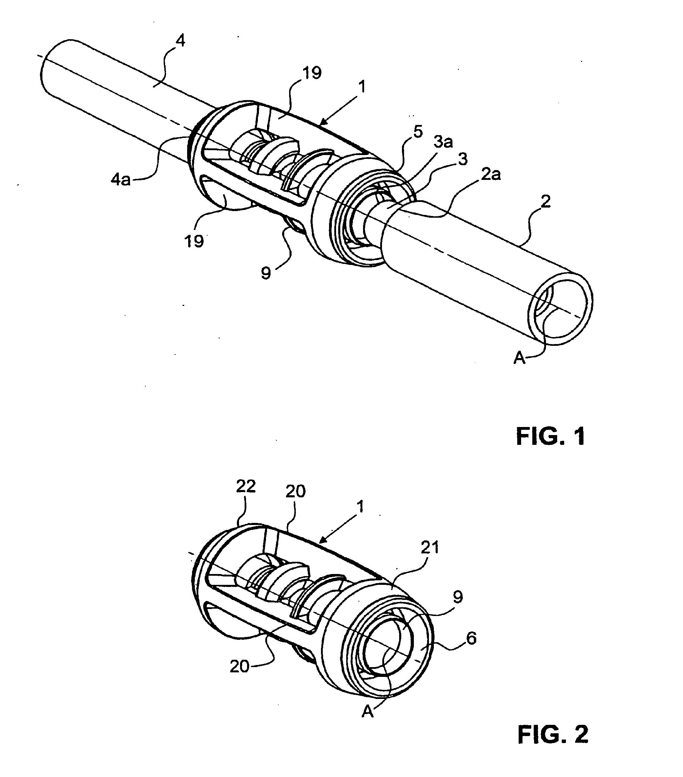

Das Werkzeug 1 dient gemäss Figur 1 zum Entgraten und Kalibrieren von Rohren den 2, 3 und 4, die unterschiedliche Durchmesser aufweisen. Das Rohr 2 besitzt hier den grössten Durchmesser, beispielsweise einen Aussendurchmesser von 25 mm. Das Rohr 4 besitzt einen mittleren Durchmesser von beispielsweise 20 mm und das Rohr 3 den kleinsten Durchmesser von beispielsweise 16 mm. Die Rohre 2, 3 und 4 sind beispielsweise Wasserrohre, die als Verbund- oder Monorohre ausgebildet sind. Das Entgraten erfolgt jeweils an der Innenkante und Aussenkante einer Stirnseite 2a, 3a bzw. 4a. Vor dem Entgraten werden die Rohrenden kalibriert. Hierzu werden die Rohre 2, 3, und 4 jeweils in einer Richtung der Achse A in eine erste Öffnung 6 oder in einen zweite Öffnung 7 eines Gehäuses 5 eingeschoben. Das Gehäuse 5 ist hier als rohrförmiger Griff ausgebildet, an dem das Werkzeug 1 gefasst und um die Achse A rotiert werden kann. Der Griff 5 bildet somit Antriebsmittel.

Das Gehäuse 5 bzw. der Griff ist wie erwähnt rohrförmig und erstreckt sich in Richtung der Rotationsachse A. Er besitzt wie ersichtlich zwei im Abstand zu einander angeordnete ringförmige Teile 21 und 22, die mit drei Stegen 20 miteinander verbunden sind. Diese Stege 20 erstrecken sich jeweils in Längsrichtung der Rotationsachse A und sind bezüglich dieser Rotation symmetrisch angeordnet. Zwischen jeweils zwei Stegen 20 befindet sich ein Fenster 19, das sich zwischen den beiden Teilen 21 und 22 erstreckt. Die Fenster 19 sind für die Spanabfuhr beim Entgraten vorgesehen. Das Gehäuse 5 ist vorzugsweise aus einem Kunststoff hergestellt. Insbesondere ist das Gehäuse 5 an die weiter unten beschriebenen Kalibrierkörper angespritzt. Insbesondere sind diese Kalibrierkörper umspritzt, und somit in das Gehäuse 5 eingebettet.

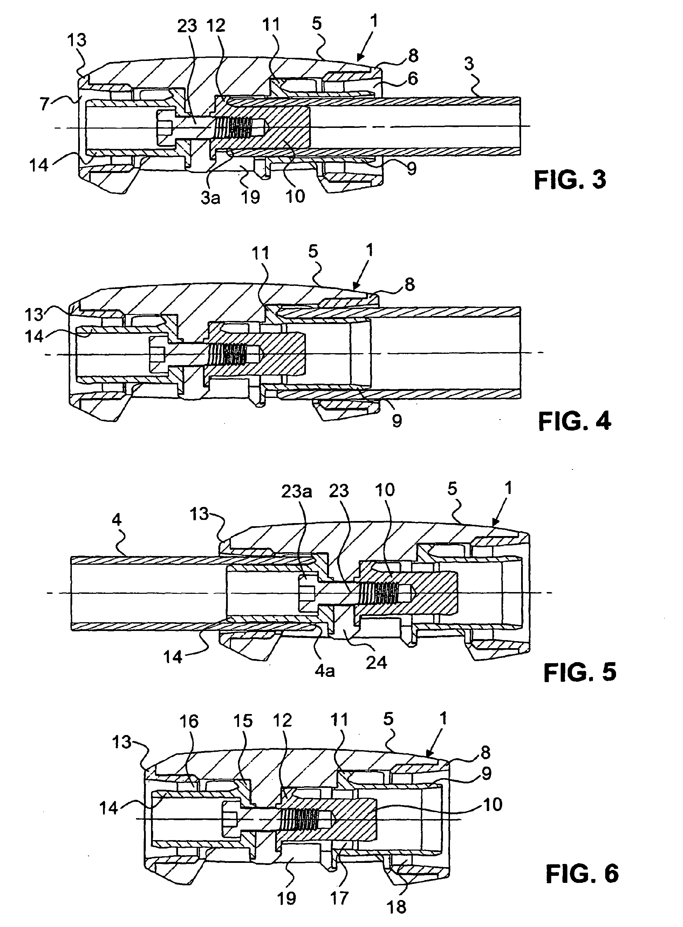

Zum Kalibrieren des Rohres 3 sind gemäss Figur 3 ein Kalibrierkörper 9 sowie ein Kalibrierkörper 10 vorgesehen. Der Kalibrierkörper 9 ist wie ersichtlich hülsenförmig ausgebildet, während der Kalibrierkörper 10 als Zapfen bzw. Dorn ausgebildet ist. Der Kalibrierkörper 9 kalibriert das Rohr 3 beim Einschieben in die Öffnung 6 aussenseitig, während der Kalibrierkörper 10 das Rohr 3 innenseitig kalibriert. Wie ersichtlich, befinden sich die beiden Kalibrierkörper 9 und 10 vollständig innerhalb des Gehäuses 5. Der Kalibrierkörper 10 besitzt eine Schneide 12, welche das Rohrende 3a des Rohres 3 bei einer rotierenden Drehbewegung um die Achse A entgratet und innen und aussen eine Fase einarbeitet. Die Schneide 12 besteht in der Regel aus mehreren Schneidbereichen, die drehsymmetrisch bezüglich der Rotationsachse A angeordnet sind. Solche Schneiden sind dem Fachmann an sich bekannt und brauchen hier nicht weiter erläutert zu werden. Die beim Entgraten anfallenden Späne werden durch die Fenster 19 abgeführt. Diese Fenster 19 sind zur Schneide 15 wenigstens bereichsweise offen.

Der hülsenförmige Kalibrierkörper 9 dient nicht nur zum Aussenkalibrieren des Rohres 3, sondern auch zum Innenkalibrieren des Rohres 2, wie die Figur 4 zeigt. Zum Entgraten des Rohres 2 besitzt der Kalibrierkörper 9 zudem eine Schneide 11. Der Kalibrierkörper 9 bildet zusammen mit der Schneide 11 einen Einsatz. Dies gilt entsprechend auch für den Kalibrierkörper 10, der mit der Schneide 12 einen einstückigen Einsatz bildet. Diese Einsätze sind aus einem geeigneten Metall, beispielsweise Stahl hergestellt. Das Rohr 2 wird somit gemäss Figur 4 mit dem Kalibrierkörper 9 innenseitig kalibriert. Gleichzeitig zum Innenkalibrieren wird das Rohr 2 mit einem weiteren hülsenförmigen Kalibrierkörper 8 aussenseitig kalibriert. Zwischen dem Kalibrierkörper 9 und dem Kalibrierkörper 8 besteht ein Ringraum 18 (Figur 6), welcher entsprechend der Dicke solcher Rohre 2 ausgebildet ist, so dass das gemäss Figur 4 eingeschobene Rohr innenseitig am Kalibrierkörper 9 und aussenseitig am Kalibrierkörper 8 anliegt. Der Kalibrierkörper 8 bildet die Aussenkante der Öffnung 6 und schützt somit das Gehäuse 5 gegen eine Beschädigung.

In der zweiten Öffnung 7 sind ein Kalibrierkörper 14 für das Innenkalibrieren des Rohres 4 sowie ein Kalibrierkörper 13 für das Aussenkalibrieren des Rohres 4 angeordnet. Der Kalibrierkörper 14 ist hier hülsenförmig ausgebildet und nimmt den Kopf 23a einer Spannschraube 23 auf, welche die beiden Kalibrierkörper 14 und 10 miteinander verbindet und diese gegen einen mittleren Teil 24 des Gehäuses 5 spannt. Der Kalibrierkörper 14 ist gleichzeitig auch zum Entgraten des Rohres 4 vorgesehen und besitzt eine entsprechende Schneide 15 an welcher die Stirnseite 4a entgratet werden kann. Zum Aussenkalibrieren des Rohres 4 dient der Kalibrierkörper 13 der wie ersichtlich ebenfalls hülsenförmig ausgebildet ist und den äusseren Rand der Öffnung 7 bildet. Die beiden Kalibrierkörper 8 und 13 sind vorzugsweise gleich ausgebildet. Zwischen dem Kalibrierkörper 14 und dem Kalibrierkörper 13 ist gemäss der Figur 6 ebenfalls ein Ringraum 16 angeordnet, welcher das zu kalibrierende Ende des Rohres 4 aufnimmt.

Beim beispielhaft erläuterten Werkzeug 1 können somit drei Rohre 2, 3 und 4 mit unterschiedlichen Durchmessern kalibriert und entgratet werden. Insbesondere werden die Rohre gleichzeitig innen und aussen kalibriert. Denkbar ist aber auch eine Ausführung, bei welcher lediglich zwei Rohre mit unterschiedlichem Durchmesser kalibriert werden können. Denkbar ist auch eine Ausführung, bei welcher wenigstens für einen Rohrdurchmesser auf eine Aussenkalibrierung verzichtet wird.

### Bezugszeichenliste

- 1: Werkzeug
- 2: Rohr
- 2a: Stirnseite
- 3: Rohr
- 3a: Stirnseite
- 4: Rohr
- 4a: Stirnfläche
- 5: Gehäuse
- 6: Erste Öffnung
- 7: Zweite Öffnung
- 8: Kalibrierkörper
- 9: Kalibrierkörper
- 10: Kalibrierkörper
- 11: Schneide
- 12: Schneide
- 13: Kalibrierkörper
- 14: Kalibrierkörper
- 15: Schneide
- 16: Ringraum
- 17: Ringraum
- 18: Ringraum
- 19: Fenster
- 20: Steg
- 21: Teil
- 22: Teil
- 23: Spannschraube
- 23a: Schraubenkopf
- 24: Teil
- A: Achse

## Patentansprüche

1. Rotierbares Werkzeug zum Kalibrieren und Entgraten von wenigstens zwei Rohrenden mit unterschiedlichen Durchmessern, mit einem Gehäuse (5), mit wenigstens zwei Kalibrierkörpern (8, 9, 10, 13, 14) und mit wenigstens zwei Schneiden (11, 12, 15) zum Entgraten, wobei das Gehäuse (5) als rohrförmiger Griff ausgebildet ist, mit dem das Werkzeug von Hand zum Kalibrieren und Entgraten rotierbar ist und wobei im Gehäuse (5) wenigstens zwei Kalibrierkörper (8, 9, 10, 13, 14) und zwei Schneiden (11, 12, 15) zum Kalibrieren und Entgraten von Rohrenden mit unterschiedlichen Durchmessern angeordnet sind, **dadurch gekennzeichnet, dass** das Gehäuse Griffbereiche (20) aufweist, die sich jeweils in Längsrichtung des Gehäuses (5) erstrecken, wobei zwischen den Griffbereichen (20) Fenster (19) für die Spanabfuhr angeordnet sind, dass das Gehäuse zwei im Abstand zueinander angeordnete ringförmige Teile (21, 22) aufweist, dass diese Teile (21, 22) mit wenigstens zwei, vorzugsweise drei Stegen (20) miteinander verbunden sind und diese Stege (20) die genannten Griffbereiche bilden.

2. Werkzeug nach Anspruch 1, **dadurch gekennzeichnet, dass** wenigstens zwei Kalibrierkörper (9, 10) und zwei Schneiden (11, 12) koaxial ineinander angeordnet sind.

3. Werkzeug nach Anspruch 1 oder 2, **dadurch gekennzeichnet, dass** das Gehäuse (5) an gegenüberliegenden Enden jeweils eine Öffnung (6, 7) aufweist, in die in entgegengesetzter Richtung jeweils ein Rohrende zum Kalibrieren und Entgraten einsetzbar ist.

4. Werkzeug nach Anspruch 3, **dadurch gekennzeichnet, dass** in der einen ersten Öffnung (6) Rohrenden mit zwei unterschiedlichen Durchmessern und in der anderen Öffnung (7) wenigstens ein Kalibrierkörper (13, 14) und eine Schneide (15) zum Kalibrieren eines Rohrendes mit einem dritten Rohrdurchmesser angeordnet sind.

5. Werkzeug nach einem der Ansprüche 1 bis 4, **dadurch gekennzeichnet, dass** wenigstens ein Kalibrierkörper und wenigstens eine Schneide eine einstückige Einheit bilden.

6. Werkzeug nach einem der Ansprüche 1 bis 5, **dadurch gekennzeichnet, dass** die Kalibrierkörper und die Schneiden vom Gehäuse (5) umspritzt sind.

7. Werkzeuge nach einem der Ansprüche 1 bis 6 **dadurch gekennzeichnet, dass** das Gehäuse (5) bezüglich der Rotationsachse (A) des Werkzeugs drehsymmetrisch ausgebildet ist.

8. Werkzeug nach einem der Ansprüche 1 bis 7, **dadurch gekennzeichnet, dass** wenigstens ein Kalibrierkörper (9) für einen Rohrdurchmesser der Innenkalibrierung und für einen anderen Rohrdurchmesser der Aussenkalibrierung dient.

## Claims

1. Rotary tool for calibrating and deburring at least two pipe ends of different diameters, comprising a housing (5), comprising at least two calibrating bodies (8, 9, 10, 13, 14) and comprising at least two cutting edges (11, 12, 15) for deburring, the housing (5) being designed as a tubular handle with which the tool can be rotated manually for calibrating and deburring, and at least two calibrating bodies (8, 9, 10, 13, 14) and two cutting edges (11, 12, 15) for calibrating and deburring pipe ends of different diameters being arranged in the housing (5), **characterized in that** the housing has handle regions (20) which in each case extend in the longitudinal direction of the housing (5), windows (19) for the chip disposal being arranged between the handle regions (20), **in that** the housing has two annular parts (21, 22) arranged at a distance from one another, **in that** these parts (21, 22) are connected to one another by at least two, preferably three, webs (20) and these webs (20) form said handle regions.

2. Tool according to Claim 1, **characterized in that** at least two calibrating bodies (9, 10) and two cutting edges (11, 12) are arranged coaxially one inside the other.

3. Tool according to Claim 1 or 2, **characterized in that** the housing (5) has a respective opening (6, 7) at opposite ends, into which openings (6, 7) a respective pipe end can be inserted in the opposite direction for calibrating and deburring.

4. Tool according to Claim 3, **characterized in that** pipe ends of two different diameters are arranged in the one first opening (6), and at least one calibrating body (13, 14) and a cutting edge (15) for calibrating a pipe end of a third pipe diameter are arranged in the other opening (7).

5. Tool according to one of Claims 1 to 4, **characterized in that** at least one calibrating body and at least one cutting edge form a one-piece unit.

6. Tool according to one of Claims 1 to 5, **characterized in that** the calibrating body and the cutting edges are encapsulated by the housing (5) by moulding.

7. Tool according to one of Claims 1 to 6, **characterized in that** the housing (5) is designed to be rotationally symmetrical with respect to the rotation axis (A) of the tool.

8. Tool according to one of Claims 1 to 7, **characterized in that** at least one calibrating body (9) serves for the internal calibrating for one pipe diameter and for the external calibrating for another pipe diameter.

## Revendications

1. Outil rotatif destiné à l'étalonnage et à l'ébavurage d'au moins deux extrémités de tuyau dotées de différents diamètres, avec un boîtier (5), avec au moins deux corps d'étalonnage (8, 9, 10, 13, 14) et avec au moins deux lames (11, 12, 15) pour l'ébavurage, le boîtier (5) prenant la forme d'une poignée de forme tubulaire avec laquelle l'outil peut être tourné à la main pour l'étalonnage et l'ébavurage et au moins deux corps d'étalonnage (8, 9, 10, 13, 14) et deux lames (11, 12, 15) étant disposés dans le boîtier (5) pour l'étalonnage et l'ébavurage d'extrémités de tuyau dotées de différents diamètres, **caractérisé en ce que** le boîtier comporte des zones de préhension (20) s'étendant respectivement dans la direction longitudinale du boîtier (5), des fenêtres (19) étant disposées entre les zones de préhension (20) pour l'évacuation des copeaux, **en ce que** le boîtier comporte deux parties de forme annulaire (21, 22) disposées à distance l'une de l'autre, **en ce que** ces parties (21, 22) sont reliées entre elles à l'aide d'au moins deux, de préférence trois étais (20) et **en ce que** ces étais (20) forment lesdites zones de préhension.

2. Outil selon la revendication 1, **caractérisé en ce qu'**au moins deux corps d'étalonnage (9, 10) et deux lames (11, 12) sont disposés l'un dans l'autre de façon coaxiale.

3. Outil selon la revendication 1 ou 2, **caractérisé en ce que** le boîtier (5) comporte au niveau de ses extrémités opposées respectivement une ouverture (6, 7) dans laquelle respectivement une extrémité de tuyau peut être insérée dans une direction opposée pour l'étalonnage et l'ébavurage.

4. Outil selon la revendication 3, **caractérisé en ce que** des extrémités de tuyau de deux diamètres différents sont disposées dans la première ouverture (6), et **en ce qu'**au moins un corps d'étalonnage (13, 14) et une lame (15) sont disposés dans l'autre ouverture (7) pour l'étalonnage d'une extrémité de tuyau présentant un troisième diamètre de tuyau.

5. Outil selon l'une quelconque des revendications 1 à 4, **caractérisé en ce qu'**au moins un corps d'étalonnage et au moins une lame forment une unité réalisée d'un seul tenant.

6. Outil selon l'une quelconque des revendications 1 à 5, **caractérisé en ce que** le corps d'étalonnage et les lames sont injectés à partir du boîtier (5).

7. Outil selon l'une quelconque des revendications 1 à 6, **caractérisé en ce que** le boîtier (5) est réalisé de façon symétrique en rotation par rapport à l'axe de rotation (A) de l'outil.

8. Outil selon l'une quelconque des revendications 1 à 7, **caractérisé en ce qu'**au moins un corps d'étalonnage (9) utilise l'étalonnage intérieur pour un diamètre de tuyau et l'étalonnage extérieur pour un autre diamètre de tuyau.
